**Europäisches Patentamt**

**European Patent Office**

**Office européen des brevets**

(11) Publication number: **0 555 830 A1**

# EUROPEAN PATENT APPLICATION

(21) Application number: **93102066.3**

(22) Date of filing: **10.02.93**

(51) Int. Cl.5: **C09D 177/00**, C09D 5/02

(30) Priority: **14.02.92 US 836982**

(43) Date of publication of application:
**18.08.93 Bulletin 93/33**

(84) Designated Contracting States:
**DE FR GB IT NL**

(71) Applicant: **FINDLEY ADHESIVES INC.**
**11320 Watertown Plank Road**
**Wauwatosa Wisconsin 53226-3413(US)**

(72) Inventor: **Bublitz, Timothy E.**
**8811 West Grant**
**West Allis, Wisconsin 53227(US)**
Inventor: **Timm, Larry S.**
**714 East Holt**
**Milwaukee, Wisconsin 53207(US)**

(74) Representative: **von Füner, Alexander, Dr. et al**
**Patentanwälte v. Füner, Ebbinghaus, Finck**
**Mariahilfplatz 2 & 3**
**D-81541 München (DE)**

(54) **Water-based release lacquer composition for use on packaging materials.**

(57) A water-based release lacquer composition for use in combination with a packaging material and which includes an intimate blend of a polyamide resin microdispersion and an antifoaming agent.

EP 0 555 830 A1

1. Field of the Invention:

The present invention relates to a water-based release lacquer composition which finds usefulness when it is coated on packaging material, and more particularly, to such a composition which releases from a water-based cold seal adhesive which is coated in discrete zones on the same packaging material and which further does not have a deleterious effect on the ability of the water-based cold seal adhesive to form an effective bond under predetermined conditions following a prolonged period of storage.

2. Background of the Invention:

The prior art suggests the desirability of using various water dispersible polyamide blends for the purposes of achieving assorted laudable benefits. For example, U.S. Patent No. 4,804,573 to McCarthy et al. discloses the use of packaging materials which include a sheet material having on the rear face a water-based or water borne cold seal adhesive applied thereto, without a primer coat, and on the front face, a water-based or water-borne overprint varnish applied over any printed material. McCarthy et al. further discloses that the cold seal adhesive is applied to chosen areas of the rear face of the same packaging material and dried. The cold seal adhesive disclosed in McCarthy et al. may be any combination of one or more cohesive latex materials such as a synthetic rubber emulsion or butyl or nitrile rubber emulsion but more particularly natural rubber latex, combined with a water-based or water-borne synthetic coating resin, particularly a polyamide resin emulsion or dispersion; an acrylic resin emulsion, or dispersion; a polystyrene resin emulsion or dispersion; a polyester resin emulsion or dispersion; a polyvinylidene chloride resin emulsion or dispersion, or a combination of any of the above-identified emulsions or dispersions with each other or with, a polyvinyl ethylene emulsion; or a polyvinyl alcohol emulsion; or a polyvinyl acetate emulsion; or a carboxyl methyl cellulose solution in water, with or without the addition of waxes and antifoaming agents. The overprint varnish employed with the water-based cold seal adhesive includes the water-based synthetic coating resins which were set forth, above, and which further may include polytetrafluorethylene dispersions in water, polypropylene wax emulsions, or dispersion, in water, or combinations of both.

Further, the reference to Bornack et al., U.S. Patent No. 4,810,747 relates to water dispersable polyamide blends, and more particularly to a blend of two polyamide resins which are claimed to be useful in flexographic ink compositions as well as cold seal release lacquer formulations. The first resin used in the formulation includes dibasic derivatives of fatty acids, monobasic acid and organic polyamines. The second resin includes isophthalic acid, dibasic derivatives of fatty acids and organic polyamines.

Those skilled in the art, upon reviewing the above-identified references will readily recognize that the above-identified compositions, while operating with some degree of acceptability, and reliability, have displayed assorted shortcomings which have detracted from their commercial usefulness as release lacquers when used in combination with water-based cold seal adhesives such as those cold seals which are made commercially available by Findley Adhesives, Inc., of Wauwatosa, Wisconsin under the Trademark "Nip-Weld" and The Technical Coatings Company of Fairlawn, New Jersey under the trade designation "36001A". More particularly, and one of the major shortcomings noted with respect to the water-based overprint varnish compositions disclosed in the McCarthy et al. reference, relates to the inability of the water-based release lacquers disclosed therein to release (not block) the cold seals disclosed, above, when placed in a stored condition (such as in a roll). While the McCarthy et al. reference suggests that blocking is eliminated by employing the formulations disclosed therein, testing under more realistic, and severe storage conditions (100 PSI and 50° C for 16 hours) reveals that the water-based overprint varnishes disclosed in the McCarthy et al. reference have a propensity to block the water-based cold seal adhesives identified, above, when exposed to these storage conditions. Further, the water-based cold seal adhesive bond strength produced following exposure of this same cold seal adhesive to these more severe storage conditions do not provide satisfactory results. These characteristics will be discussed in greater detail hereinafter.

Still another shortcoming attendant with the use of the above-identified compositions disclosed in the McCarthy et al. reference relates to the propensity for these same formulations and more particularly, the water-based cold seal adhesive formulations to yellow or otherwise discolor when stored in contact with the water-based overprint varnishes. Moreover, these same water-based cold seal adhesive compositions disclosed in the reference to McCarthy et al., when exposed to the more realistic storage conditions, noted above, displayed a tendency to create aberrations in any printed material which was positioned immediately in contact with same.

Therefore, it has long been known that it would be desireable to have an improved water-based release lacquer composition for use in combination with packaging materials, and wherein the release lacquer releases from, and does not block a water-based cold seal adhesive which is applied to one side of the packaging material when exposed to environmental conditions which include pressures of 100 PSI at 50° C for 16 hours, and further produces an adhesive bond of 400 grams per inch or achieves substrate destruction when sealed at ambient temperatures with a pressure of 65 PSI following storage.

Summary of the Invention

Therefore, it is an object of the present invention to provide an improved water-based release lacquer composition for use on packaging materials and the like.

Another object of the present invention is to provide a water-based release lacquer composition which may be applied on one surface of a packaging material, and which further does not substantially block or otherwise impart deleterious characteristics to a water-based cold seal adhesive composition when placed in contact with the water-based cold seal adhesive, and exposed to environmental conditions which include 100 PSI at temperatures of 50° C for 16 hours.

Another object of the present invention is to provide a water-based release lacquer composition which includes about 70% to about 99%, by weight of a polyamide resin microdispersion, and about 0 to about .5%, by weight of an defoaming agent.

Another object of the present invention is to provide a water-based release lacquer composition which may include predetermined amounts of slip modifiers such as carnuba/polyethylene wax dispersion; parafin/polyethylene wax dispersion; carnuba/ parafin wax dispersion and polyurethane polymer dispersion.

Another object of the present invention is to provide a water-based release lacquer composition, which, when coated on printed packaging material, and maintained under typical storage conditions such as in a continuous roll, does not, upon separation, create aberrations in the printed matter on adjacent packaging materials which are placed in intimate contact with the present water-based release lacquer composition.

Another object of the present invention is to provide a water-based release lacquer composition which does not aesthetically detract from the stylish appearance of printed packaging material, and which further does not discolor or degrade the bonding strength of a water-based cold seal adhesive which may be exposed to same.

Another object of the present invention is to provide a water-based release lacquer composition which is operable to obtain the individual benefits to be derived from the related prior art compositions and practices while avoiding the detriments individually associated therewith.

Further objects and advantages are to provide improved elements and arrangements thereof in a water-based release lacquer composition for the purposes intended, and which is dependable, economical, durable and fully effective in accomplishing these intended purposes.

These and other objects and advantages are achieved in a water-based release lacquer composition for use on a packaging material which has selected areas which are coated with a water-based cold seal adhesive, and wherein the release lacquer composition separates from and does not block, the water-based cold seal adhesive under storage conditions which include the exposure of the packaging material to environmental conditions including 100 PSI, at 50° C, for 16 hours, and wherein the water-based cold seal adhesive is substantially unaffected when exposed to the water-based release lacquer composition and produces a bond strength of at least 400 grams per inch or achieves substrate destruction when sealed at ambient temperatures with a pressure of 65 PSI, the water-based release lacquer composition including about 70 to about 99%, by weight, of a polyamide resin microdispersion; 0 to about 10%, by weight, of a carnuba/polyethylene wax dispersion; 0 to about 10%, by weight, of a parafin/polyethylene wax dispersion; 0 to about 10%, by weight, of a carnuba/parafin wax dispersion; 0 to about 10% by weight of a polyurethane polymer dispersion; and 0 to about .5%, by weight of a defoaming agent.

Description of the Preferred Embodiment

The water-based release lacquer composition of the present invention contains about 70 to about 99%, by weight, of a polyamide microdispersion, and 0 to about .5%, by weight of a defoaming agent. More particularly, the preferred invention includes about 70% to about 99%, by weight, of a polyamide microdispersion; 0 to about 10%, by weight of a carnuba/polyethylene wax dispersion; 0 to about 10%, by weight, of a parafin/polyethylene wax dispersion; 0 to about 10%, by weight, of a carnuba/parafin wax dispersion; 0 to about 10%, by weight, of a polyurethane polymer dispersion; and 0 to about .5%, by weight of a defoaming agent.

As earlier discussed, the water-based release lacquer compositions of the present invention find usefulness as overprint coatings which are applied to packaging material, and typically printed packaging materials. In this regard, the packaging material generally is characterized in that it is sheet-like material which is manufactured from synthetic plastic films, polyolefins, foils (including aluminum foil) and assorted papers. The construction of the packaging or sheet-like material is set forth in greater detail in the reference to McCarthy et al., U.S. Patent No. 4,804,573, and which is incorporated by reference herein.

As should be understood, the packaging materials noted above are normally stored, such as in a roll, and wherein the cold seal adhesive is applied to discrete areas of the rearwardly or inside facing surface of same and will be pressed, while stored, into intimate contact with the water-based release lacquer coating of an adjacent piece of packaging material. When maintained or stored in this fashion, (such as in a roll), the individual sheet materials may be exposed to environmental conditions, such as at the center of the roll, which include pressures of up to 100 PSI, and temperatures of up to and including 50° C. As will be appreciated, the water-based cold seal adhesive must not adhere (block) to the front face of the packaging material when it is being stored, and prior to use, but must act to seal the packaging material when two sheets of the material are brought together, rear face, to rear face, under pressure. In most instances, the adhesive bond is established by utilizing conventional packaging machinery which have a pair of jaws which deliver a pressure of about 65 PSI to the packaging material thereby establishing a seal. To be considered a commercially acceptable seal, it has been determined that the seal must have a strength of at least 400 grams per inch or alternatively, achieve substrate destruction upon forcible separation.

The water-based release lacquer composition of the present invention, as earlier discussed, includes as a constituent element, about 70 to about 99%, by weight of a polyamide resin microdispersion. In this regard, the inventors have discovered surprising results and achieved several laudable benefits when employing a microdispersion polyamide composition which is commercially available from The Union Camp Company of Savannah, Georgia and which is marketed under the trade designation "Micromid 3022". This is in relative comparison to more traditional polyamide dispersions such as those which are disclosed with more particularly in the reference to McCarthy et al. In particular, and as will be demonstrated in the data, below, packaging materials which were manufactured in accordance with the teachings of McCarthy et al. were unable to achieve the bond strength, noted above, that is, 400 grams per inch or achieve substrate destruction and further, the overprint varnishes disclosed in McCarthy et al. showed a propensity to block to water-based cold seal adhesives such as that earlier described, when exposed to the storage conditions discussed earlier. Further, the overprint varnishes disclosed in McCarthy et al. occasionally created aberrations in the printed matter when separated from the roll. Such aberrations typically include stripping or otherwise removing or discoloring the printing deposited on the sheet material. Further, the packaging materials disclosed in McCarthy et al. appear to degrade. In particular, it was noted following testing that the water-based adhesive compositions exposed to the overprint varnishes disclosed in the McCarthy et al. reference tended to discolor, by turning a pale shade of yellow, when maintained under the storage conditions noted earlier. This change in the color of the water-based cold seal adhesive is not desireable from a commercial standpoint.

The water-based cold seal adhesives employed in combination with the new and novel water-based release lacquers of the present invention may be any of the water-based cold seal adhesives disclosed in McCarthy et al., and which are manufactured using techniques which are well understood by those skilled in the art or which are discussed in the same reference. For purposes of brevity therefore, the compounding of these water-based cold seal adhesives will not be discussed in further detail herein. However, it has been discovered that the novel water-based release lacquer of the present invention, when coated on packaging material and when further used in combination with water-based cold seal adhesives manufactured by, for example, The Technical Coatings Company of Fairlawn, New Jersey under the trade designation "36001A," or Findley Adhesives, Inc. of Wauwatosa, Wisconsin under the trademark Nip-Weld® produce a packaging material which does not block the same water-based cold seal adhesive when stored at conditions of up to 100 PSI and 50° C for 16 hours, and further does not have any substantial deleterious effect on the water-based cold seal adhesive such that adhesive bonds may be formed, using conventional sealing equipment, and which have a strength of up to 400 grams per inch, or otherwise achieves substrate destruction when separated by mechanical means.

The invention is illustrated in the following non-limiting examples.

Example 1

The water-based release lacquer of the present invention is formulated utilizing the following techniques.

4

To a conventional mixing kettle, 3932.5 lbs. of a composition of "Micromid 3022" which is a polyamid microdispersion, is charged. Stirring is commenced. To this kettle is added 350 lbs. of the composition marketed under the trade designation "Neorez XR-9610" and which is a polyurethane polymer dispersion. Stirring continues. To this is added 200 lbs. of "MichemLube 110", and which is a carnuba/polyethylene wax dispersion. Stirring continues for this mixture at a speed which does not induce foaming. To this combination, 125 lbs. of Michemlube 135 is added. "MichemLube 135" is a parafin/polyethylene wax dispersion. To this combination is added 400 lbs. of MichemLube 182 which is a carnuba/parafin wax dispersion. After further agitation, 2.5 lbs. of "Foamaster VF" is added and the entire composition is blended until it is uniform. "Foamaster VF" is a defoaming agent. The composition is then screened through a 150 micron bag. The water-based release coating is then applied to the printed materials in the fashion as described in the McCarthy et al. reference.

The water-based release lacquer composition of the present invention has as earlier discussed, a preferred formulation which includes:

about 70% to about 99%, by weight, of a polyamide microdispersion, and wherein a suitable composition may be purchased under the trade designation "Micromid 3022" from The Union Camp Company of Savannah, Georgia;

about 0 to about 10%, by weight, of a carnuba/polyethylene wax dispersion, and wherein a suitable composition may be purchased from the Michelman Chemical Company of Cincinnati, Ohio under the trade designation "Michemlube 110";

about 0 to about 10%, by weight, of a parafin/polyethylene wax dispersion, and wherein an appropriate composition may be purchased from the Michelman Chemical Company under the trade designation "Michemlube 135";

about 0 to about 10%, by weight, of a carnuba/parafin wax dispersion; and wherein an appropriate composition may be purchased from the Michelman Chemical Company under the Trade designation "Michemlube 182";

about 0 to about 10%, by weight, of a polyurethane polymer dispersion, and wherein an appropriate composition may be purchased from the ICI Americas Corporation of Wilmington, Massachusetts under the trade designation "Neorez XR-9610"; and

about 0 to about .5%, by weight, of a defoamer, and wherein a suitable composition may be purchased from the Henkel Company of Amber, P.A. under the trade designation "Foamaster VF".

The water-based cold seal adhesive formulations which were identified above, and which are marketed under the trade designation "36001A" by The Technical Coatings Company of Fairlawn, New Jersey, or Findley Adhesives, Inc. under the Trademark "Nip-Weld®" are maintained as trade secrets. However, the following formulation is exemplary of similar formulations and emulates closely the performance of the above-identified compositions:

about 11.8%, by weight, of a polyvinyl acetate homopolymer and wherein a suitable polyvinyl acetate homopolymer may be purchased from the National Starch Company of Woodruff, South Carolina under the trade designation "Resyn 15-1010";

about 7.3%, by weight, of a VAE copolymer, and wherein a suitable copolymer may be purchased under the trade designation "Duroset E200", and which is sold by The National Starch Company of Woodruff, South Carolina;

about 70.1%, by weight, of a natural latex having a high ammonia content, and wherein a suitable composition may be purchased from The Goodyear Rubber Plantation Company of Akron, Ohio, under the trade designation "Natural Latex, 62% High Ammonia";

about .4%, by weight, of a compatible defoamer, and wherein a suitable defoamer may be purchased from the PPG Mazer Company of Gurnee, Illinois, under the trade designation "MAZU 2502";

about .03%, by weight, of an Ammonium Hydroxide 26° BE and which is sold under the same trade designation by the Van Waters & Rogers Company, Inc. of Oak Brook, Illinois; and

10.37%, by weight, of water.

The water-based cold seal formulation noted above as well as the water-based release lacquer compositions of the present invention were compounded using the techniques disclosed herein, or such as that discussed in the McCarthy et al reference, as appropriate. Further, these same materials were coated onto printed materials in the same fashion and in the same patterns as that disclosed in McCarthy et al.

To demonstrate the surprising and unexpected results achieved by utilizing the present formulation, various printed samples were prepared and which had applied thereto the water-based cold seal adhesive formulation noted above, and further were coated with commercially available release coatings available from assorted manufacturers. For example, and as best understood by a study of the graph noted below, printed samples were prepared which utilized release lacquer compositions made in accordance with the teachings of McCarthy et al.; Technical Coatings Company and which were marketed under trade designation "CF-212"; a release coating sold under no particular trade designation by the Roy Mal Corporation of Newport, New Hampshire; a release coating supplied by the Cork Chemical Company of Holmes, Pennsylvania and which is sold under no particular trade designation; a release coating supplied under no particular trade designation by the Croda Company of New York, New York; a release composition supplied under the trade designation "F342-58" by The BASF Corporation of Clifton, New Jersey; a release composition supplied by the Crown Zellerbach Incs. of Shrewsbury, Missouri under no particular trade designation; a release coating supplied by The Manders J & B Company of Prescott, Ontario, Canada under the trade designation "34885"; a release composition supplied by the American Inks and Coating Corporation of Valley Forge, Pennsylvania, and which is supplied under the trade designation C26411-W2; a release coating supplied by the Aurachem Corporation of Harrison, New Jersey and which is sold under the trade designation 51992B and finally, a comparison with the most recent composition prepared in accordance with the formulation noted above.

To evaluate the properties of the present water-based release lacquer composition of the present invention, various characteristics were evaluated. More particularly, the compositions, that is, the commercially available release compositions noted above were evaluated for their compliance under the non-regulated emmissions portion of the 1990 Clean Air Act and which has been adopted by the U.S. Environmental Protection Agency. Further, these release compositions were evaluated for their ability to release cleanly, that is, not block the water-based cold seal compositions discussed above. In addition, and when bonded appropriately, the strength of the bond was evaluated to determine whether it achieved a minimum strength of 400 grams per inch or achieved substrate destruction when separated by mechanical means. As earlier discussed, sealing was achieved by using conventional sealing equipment and wherein the packaging material were sealed rear face to rear face between serrated jaws using a pressure of 65 pounds per square inch and a .5 second dwell time. Additionally, the release compositions were evaluated for their ability to be used in combination with printing type machinery. This has been identified under the designation "Machineability". Other characteristics were further evaluated. For example, a controlled coefficient of friction (COF) was desired to ensure that the printed materials having these release lacquer compositions fell within a range which was common in the industry. As should be understood, common industrial values for an acceptable COF lie in a range of about .15 to .25. The coefficient of friction (COF) was determined by utilizing that procedure which is set forth in ASTM D4518-87 and which is incorporated by reference herein. Moreover, aesthetics were evaluated, that is, whether the water-based overprint release coatings had an appealing gloss and/or appearance which enhanced the appearance of the printed packaging material. Finally, the water-based overprint release coatings were evaluated with respect to whether they caused any ink aberrations in the printed materials following storage.

The graph which is set forth, below, identifies the commercial source for the water-based release composition and the individual tests. The graph further indicates whether those compositions achieve acceptable levels of performance in the various categories discussed above. It should be noted that when the commercially available release coatings, noted above, are compared solely against the criteria of cleanly releasing from the water-based cold seal adhesive, and further producing an acceptable bond strength, the commercially available water-based release compositions are unable to achieve the performance of the present invention. Further, and in relative comparison to the release lacquers disclosed in the McCarthy et al. reference, which is believed to be the closest prior art reference known to the inventors, these same compositions were unable to release under the same temperature and pressure parameters and further, were unable to achieve the same bond strength as that achieved by the present formulations.

Key: Y = meets requirements
X = does not meet requirements
NT = not tested

COMPARISON OF COMMERCIALLY AVAILABLE RELEASE COMPOSITIONS WITH THE PRESENT INVENTION

| | 1990 Clean Air Act | Release | Bond strength | Machinability | COF Suitable | Aesthetics | Aberration |
|---|---|---|---|---|---|---|---|
| McCarthy et al. | Y | X | X | NT | NT | X | NT |
| Technical Coatings Co. | Y | X | X | NT | X | NT | NT |
| Technical Coatings Company "CF-212" | Y | Y | X | NT | NT | NT | NT |
| Roy Mal Corporation | Y | Y | X | NT | Y | NT | NT |
| Cork Chemical Co. | Y | X | NT | NT | Y | Y | NT |
| Croda Company | Y | X | X | NT | Y | X | NT |
| BASF Corporation "F342-58" | Y | X | X | NT | NT | NT | NT |
| BASF Corporation | Y | Y | X | NT | NT | X | NT |
| Crown Zellerbach | Y | X | NT | NT | NT | X | NT |
| Manders J&B Company 34885 | Y | X | NT | NT | NT | X | NT |
| American Inks Co. C26411-W2 | Y | Y | NT | NT | NT | X | NT |
| Aurachem Corporation 51992B | Y | X | NT | NT | NT | X | NT |
| Inventors Composition | Y | Y | Y | Y | Y | Y | Y |

It will be apparent to those skilled in the art that the foregoing examples have been made for purpose of illustration and that variations may be made in proportions, procedures, and materials without departing from the scope of the present invention. Therefore, it is intended that the invention not be limited by the claims which follow.

7

**Claims**

1. A water-based release lacquer composition for use on a packaging material which has selected areas which are coated with a water-based cold seal adhesive, and wherein the release coating releases from, and does not block the water-based cold seal adhesive following storage conditions which include exposure of the packaging material to conditions of 100 PSI at 50° C for 16 hours, and wherein the water-based cold seal adhesive achieves a bond strength of 400 grams per inch, or achieves substrate destruction when sealed at ambient temperatures with a pressure of 65 PSI, the water-based release coating comprising:

     about 70 to about 99%, by weight of a polyamide resin microdispersion; and
     about .1 to about .5%, by weight, of a defoaming agent.

2. A composition as claimed in claim 1 and wherein the composition further includes about 1 to about 10%, by weight, of a slip modifier which alters the coefficient of friction of the packaging material.

3. A composition as claimed in claim 2 and wherein the slip modifier includes a carnuba/polyethylene wax dispersion.

4. A composition as claimed in claim 2 and wherein the slip modifier includes a parafin/polyethylene wax dispersion.

5. A composition as claimed in claim 2 and wherein the slip modifier includes a carnuba/parafin wax dispersion.

6. A composition as claimed in claim 1 and wherein the slip modifier includes a polyurethane polymer dispersion.

7. A composition as claimed in claim 1 and wherein the packaging material has printing deposited on the surface thereof, and wherein the composition does not, following a period of storage, and upon separation from an adjoining sheet of packaging material create aberrations in the printing deposited on the packaging material.

8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 062 138 (HÜLS) ----- | | C 09 D 177/00 C 09 D 5/02 |

TECHNICAL FIELDS SEARCHED (Int. Cl.5)

C 09 D

The present search report has been drawn up for all claims

| Place of search | Date of completion of the search | Examiner |
|---|---|---|
| THE HAGUE | 29-03-1993 | LEROY A J |

EPO FORM 1503 03.82 (P0401)